(19) Europäisches Patentamt
European Patent Office
Office européen des brevets

(11) **EP 1 267 229 B1**

(12) **EUROPÄISCHE PATENTSCHRIFT**

(45) Veröffentlichungstag und Bekanntmachung des Hinweises auf die Patenterteilung:
**26.12.2007 Patentblatt 2007/52**

(51) Int Cl.:
*G05B 13/04* (2006.01)    *G05B 17/02* (2006.01)
*F22B 35/18* (2006.01)    *F01K 13/02* (2006.01)

(21) Anmeldenummer: **02011894.9**

(22) Anmeldetag: **29.05.2002**

(54) **Steuer- und Regelverfahren und Regeleinrichtung zum An- oder Abfahren einer verfahrenstechnischen Komponente eines technischen Prozesses**

Control method and device for startup and shutdown operation of a processing component in a technical process

Méthode et dispositif de commande et de régulation pour démarrer et arrêter une composante de traitement d'un procédé technique

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **16.06.2001 DE 10129141**

(43) Veröffentlichungstag der Anmeldung:
**18.12.2002 Patentblatt 2002/51**

(73) Patentinhaber: **ABB RESEARCH LTD.**
**8050 Zürich (CH)**

(72) Erfinder:
• **Krüger, Klaus, Dr.-Ing.**
**67122 Altrip (DE)**
• **Rode, Manfred, Dipl.-Ing.**
**69168 Wiesloch (DE)**
• **Franke, Rüdiger, Dr.-Ing.**
**69121 Heidelberg (DE)**

(74) Vertreter: **Miller, Toivo et al**
**ABB Patent GmbH**
**Postfach 1140**
**68520 Ladenburg (DE)**

(56) Entgegenhaltungen:
DE-A- 3 133 222        DE-A- 3 301 895
DE-A- 4 434 294        DE-A- 19 508 474

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf ein Regelverfahren und eine Regeleinrichtung zur Durchführung des Verfahrens zum An- oder Abfahren von verfahrenstechnischen Prozessen, z.B. in Kraftwerken.

Solche Verfahren werden insbesondere zur Bestimmung von wichtigen Eingangsgrößen, zu denen vorab berechnete analoge Sollwertführungen z. B. für Brennstoffmengen, Drucksollwerte, Dampftemperaturen und für wichtige Stellgrößen von Ventilen und Umleitstationen gehören, beim An- oder Abfahren von verfahrenstechnischen Komponenten in Kraftwerken zu denen insbesondere Dampferzeuger mit Dampf- Umleitstationen und Turbinen gehören, eingesetzt.

Bekannt sind Modellverfahren, bei denen mit einem parallel zum Prozeß betriebenen mathematischen Modell zur Ermittlung und Korrektur von Führungsgrößen gearbeitet wird, insbesondere aus DE 3 133 222 und G. Kallina, "Vorausschauender Freilastrechner für das optimale Anfahren von Dampferzeugern", VGB Kraftwerkstechnik 75 (1995), Heft 7. Dabei wird ein Zustandsbeobachter verwendet, der einen Simulator nutzt, um schnellere Informationen bezüglich des Wärmespannungsverlaufes aus der Differenztemperatur zwischen Innen- und Mittelfaser eines dicken Bauteiles zu erhalten. Diese Zustandswerte sind dazu geeignet, bei einem zweiten Simulator die Grenzwertverläufe und die möglichen Führungswerte zu beobachten. Der zweite Simulator arbeitet dann ca. 10 mal schneller als der erste Simulator und damit schneller als Echtzeit. Die Bestimmung der Prozeßdaten erfolgt kontinuierlich während des An- bzw. Abfahrens.

In der Beschreibung der Funktionsweise wird deutlich, daß die Führungsgrößenbestimmung vorausschauend für einen begrenzten Zeitraum erfolgt. Der Brennstoffeintrag ergibt sich durch die Berücksichtigung der vorgegebenen Grenzwerte. Dabei wird darauf hingewiesen, daß die Wassereinspritzung erst zum Ende eines Anfahrvorganges zum Einsatz kommt.

Ein Nachteil dieses Verfahren besteht darin, daß versucht wird, das Führungs- und Störgrößenverhalten gleichzeitig zu lösen, wodurch keine optimal erzielbare Regelqualität erreicht wird. Durch den hohen Rechenzeitbedarf, hervorgerufen durch den Einsatz eines zweiten Simulators, der 10 mal schneller als Echtzeit arbeitet, werden entsprechend hohe Leistungsanforderungen an das verwendete Rechnersystem gestellt.

Die vom Kessellieferanten bzw. Verfahrenslieferanten zur Verfügung gestellten Anfahr- und Abfahrkurven beruhen meist auf stationären Betrachtungen. Dabei werden numerische Optimierungsverfahren zur Verbesserung der An-/Abfahrprozedur nicht eingesetzt.

Ausgehend von Modellverfahren, bei denen mit einem parallel zum Prozeß betriebenen mathematischen Modell zur Ermittlung und Korrektur von Führungsgrößen gearbeitet wird, liegt der Erfindung die Aufgabe zugrunde, mit Hilfe einer Regeleinrichtung eine Vorgehensweise bei der Bestimmung der wichtigen Eingangsgrößen beim An- oder Abfahren von verfahrenstechnischen Komponenten technischer Prozesse zu realisieren, dabei das Führungs- und Störgrößenverhalten zu entkoppeln und eine Aufschaltung optimaler Sollstellungen während des Prozesses, insbesondere beim An- oder Abfahren zu erreichen. Außerdem soll eine Regeleinrichtung zur Durchführung des Verfahrens angegeben werden.

Diese Aufgabe wird durch ein Steuer- und Regelverfahren zum An- oder Abfahren von verfahrenstechnischen Prozessen durch optimale modellgestützte Vorsteuerungen mit den im Anspruch 1 angegebenen Merkmalen, sowie durch eine Regeleinrichtung mit den im Anspruch 8 angegebenen Merkmalen gelöst. Vorteilhafte Ausgestaltungen der Erfindung sind in weiteren Ansprüchen angegeben.

Mit Hilfe offline durchgeführter Optimierungen und Simulationen wird zunächst das Verbesserungspotential durch geeignete Sollwertführungen, insbesondere Anfahrkurven untersucht und anschließend auf die reale Anlage angewendet. Die berechneten Sollwertführungen werden im folgenden als modellgestützte Vorsteuerungen bezeichnet. Es erfolgt dabei die Kombination einer rigorosen, dynamischen und meist nichtlinearen Modellbildung mit einer offline durchgeführten numerischen Optimierung unter Berücksichtigung von verfahrenstechnischen Rand- bzw. Nebenbedingungen, insbesondere verfahrenstechnisch- physikalischen Begrenzungen, die dann auf den realen Prozeß angewendet wird.

In einer offline Berechnung wird zuerst der optimale Stell- und Führungsgrößenverlauf für die unterlagerte, konventionelle Regelung berechnet, um das Ziel des kostenoptimalen Anfahrens unter den gegebenen Nebenbedingungen zu erreichen. Insbesondere wird hier auch minimaler Brennstoffverbrauch als Nebenbedingung berücksichtigt. Dabei kommt ein rigoroses dynamisches Prozeßmodell des zugrunde liegenden Systems zum Einsatz. Darauf wird ein Optimierungskriterium angewendet und abhängig von den vorgegebenen Nebenbedingungen die optimalen Verläufe der Optimierungsvariablen berechnet.

Nach der Ermittlung der nicht meßbaren Größen durch ein hinreichend genaues Modell des betrachteten Prozesses durch mathematisch- physikalische Methoden oder durch Auswertung von gemessenen Parametern und konstruktiven Merkmalen am realen Prozeß, erfolgt die Formulierung eines Gütefunktionals. Mit Hilfe eines geeigneten numerischen Optimierungsverfahrens im Optimierer, welcher das mathematische Prozeßmodell explizit verwendet, wird das Gütefunktional minimiert bzw. maximiert. Dabei werden die zu betrachtenden Prozeßrand- und Nebenbedingungen, die bei der Optimierung eingehalten werden müssen, mit herangezogen. Das Ergebnis sind optimierte Sollstellungen für die betrachteten Eingangsgrößen des Prozeßmodells. Das Ergebnis dieser Optimierung gibt die Einflußgrößen des betrachteten Prozesses wieder. Nach Überprüfung der berechneten Sollstellungen unter Verwendung des Prozeßmodells durch Simulation (offline) erfolgt deren Aufschaltung beim An- oder Abfahren des realen Prozesses.

Bei bereits in Betrieb befindlichen Anlagen wird das Prozeßmodell auch aus Messungen identifiziert bzw. durch solche Messungen überprüft. Zum Teil werden auch konstruktive Daten der verfahrenstechnischen Komponente benötigt, wie beispielsweise Geometrie- und Materialdaten. Durch offline durchgeführte Optimierungen und Simulationen wird das Verbesserungspotential durch neue Sollwertführungen, z.B. mittels Anfahrkurven untersucht und anschließend auf die reale Anlage angewandt.

Mit der modellgestützten Vorsteuerung erreicht man eine Verbesserung der Dynamik bezüglich des Führungsverhaltens, wobei die Vorsteuerung die Stabilität des unterlagerten Regelkreises nicht beeinflußt. Es existieren somit zwei Freiheitsgrade bei der Optimierung von Führungs- und Störgrößenverhalten. Dadurch werden die Stellglieder geschont und es kommt zu einer Entlastung der konventionellen Regelkreise, da sie nur die Abweichung vom optimalen Verlauf ausregeln müssen. Ein weiterer Vorzug besteht in der Möglichkeit, daß Vorsteuerung und Regelung unabhängig voneinander entworfen und optimiert werden. Ist ein Regler bezüglich des Störgrößenverhaltens bereits optimal eingestellt, so besteht die Möglichkeit, eine modellgestützte Vorsteuerung einzubringen, ohne diesen Regler neu zu parametrieren.

Für eine modellgestützte Vorsteuerung werden neben den Führungsgrößen auch Störgrößen betrachtet, wenn diese meßtechnisch zur Verfügung stehen. Zur überlagerten online Führungsgrößen- Generierung verwendet man einen Regelkreis, in dem der Optimierer als Regler verwendet wird. Die Echtzeitanforderungen sind dabei beträchtlich reduziert und der Regelkreis muß notwendigerweise nicht mit der gleichen Abtastzeit wie die unterlagerten Regelungen betrieben werden, da primär nur eine Anpassung der ursprünglich berechneten Sollverläufe erfolgt.

Vorteile ergeben sich auch gegenüber dem erwähnten Stand der Technik (siehe DE 3 133 222, und G. Kallina, "Vorausschauender Freilastrechner für das optimale Anfahren von Dampferzeugern", VGB Kraftwerkstechnik 75 (1995), Heft 7) dadurch, daß die Wärmespannungsberechnung beim erfindungsgemäßen Verfahren gesondert durchführbar ist.

Wird der Brennstoffbedarf im Optimierungskriterium explizit berücksichtigt, ist ein kostenoptimales Anfahren möglich. Als Ergebnis der Optimierung kann es vorkommen, daß die Wassereinspritzung der Dampferzeuger schon während der Anfahrt in betrieb gehen muß. Dieser Effekt kann sich auch auf den Brennstoffbedarf auswirken. Um die gesamte Anfahr- bzw. Abfahrzeit zu verkürzen und damit die Brennstoffkosten zu reduzieren, werden auch vorhandene Freibeträge, z.B. bei den instationären Wärmespannungen dickwandiger Bauteile, ausgenutzt.

Eine weitere Erläuterung der Erfindung erfolgt nachstehend anhand eines in den Zeichnungsfiguren dargestellten Ausführungsbeispieles.

Es zeigen:

**Fig.** 1 eine Darstellung einer Regeleinrichtung mit modellgestützter Vorsteuerung,
**Fig.** 2 eine Darstellung einer bereits existierenden Regeleinrichtung mit vorhandenen Sollwerten und modellgestützter Vorsteuerung,
**Fig.** 3 eine Simulation einer typischen Anfahrt eines Dampferzeugers, und
**Fig.** 4 eine Simulation einer optimierten Anfahrt eines Dampferzeugers.

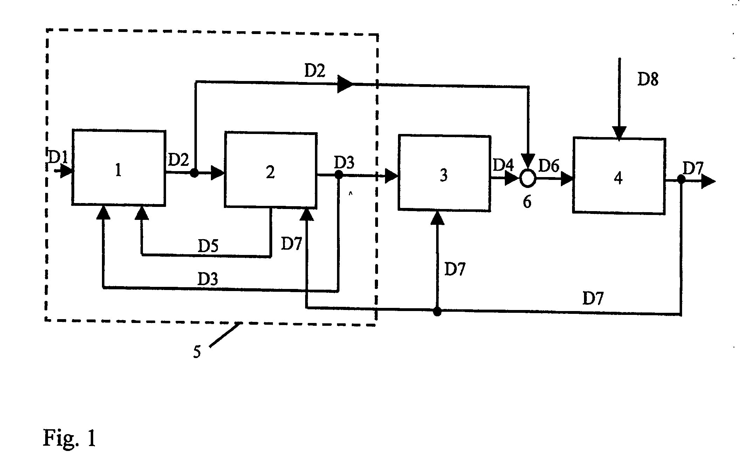

**Fig.** 1 zeigt die erfindungsgemäße Anordnung zur Durchführung des Regelverfahrens zum An- oder Abfahren wenigstens einer verfahrenstechnischen Komponente eines technischen Prozesses 4, wobei mittels einer Regeleinrichtung 3 mindestens eine Ausgangsgröße D4 und mit einer vorgeschalteten modellgestützten Vorsteuerung 5 mindestens eine Stellgröße D2 gebildet wird, die dem Prozeß 4 über eine Additionsstelle 6 als endgültige Stellgröße D6 zugeführt wird.

Für die Vorsteuerung 5 wird neben wenigstens einer Führungsgröße D1, welche die Zielgröße der Ausgangsgröße D7 des realen Prozesses 4 widerspiegelt, auch die Modellausgangsgröße D3 als Führungsgröße für die Regeleinrichtung 3 betrachtet. Bei der konkreten Anwendung der Vorsteuerung 5 wird zwischen zwei Einsatzvarianten unterschieden.

a) Im ersten Fall liegt die optimierte Modellstellgröße D2 und Modellausgangsgröße D3, welche die aktuellen Sollwerte für die realen Regelungen widerspiegeln, als numerische Vorgaben (z.B. look-up Tabellen) vor, die vorab berechnet, geeignet abgespeichert und während des Anfahrens bzw. Abfahrens in den realen Prozeß 4 als Datenstrom D6 eingespielt werden.

b) Im zweiten Fall wird diese Optimierung und Simulation des Prozeßmodells 2 repetierend während des An- oder Abfahrens durchgeführt. Dazu wird das Prozeßmodell 2 der realen Anlage nachgeführt, damit eine Konvergenz der Modellausgangsgröße D3 mit der Prozeßausgangsgröße D7 erreicht wird.

Die Vorsteuerung 5, die einen Optimierer 1 und ein Prozeßmodell 2 enthält, stellt die optimierten Modellausgangsgröße D3 der realen Regelung, d.h. der Regeleinrichtung 3, zur Verfügung. Dabei wird dem Optimierer 1 eine Führungsgröße D1 für den realen Prozeß 4 zugeführt und eine optimierte Modellstellgröße D2 ausgegeben, die dem Prozeßmodell 2 der Vorsteuerung 5 als Eingangsgröße zugeführt wird, und außerdem zur Ausgangsgröße D4 der Regeleinrichtung 3 zur Bildung der Stellgröße D6 addiert wird. Die Modellausgangsgröße D3 des Prozeßmodells 2 wird der Regeleinrichtung 3 als Sollwert zugeführt und außerdem - neben inneren, insbesondere im realen Prozeß 4 nicht meßbaren Größen D5 - zum Optimierer 1 rückgeführt.

Die Nachführung des Prozeßmodells 2 an den realen Prozeß 4 für die zweite Einsatzvariante b) erfolgt über die meßbaren Prozeßgrößen D7. Damit können Abweichungen zwischen dem Prozeßmodell 2 und dem realen Prozeß 4 beseitigt werden, insbesondere beim Auftreten von Störgrößen D8 im realen Prozeß 4.

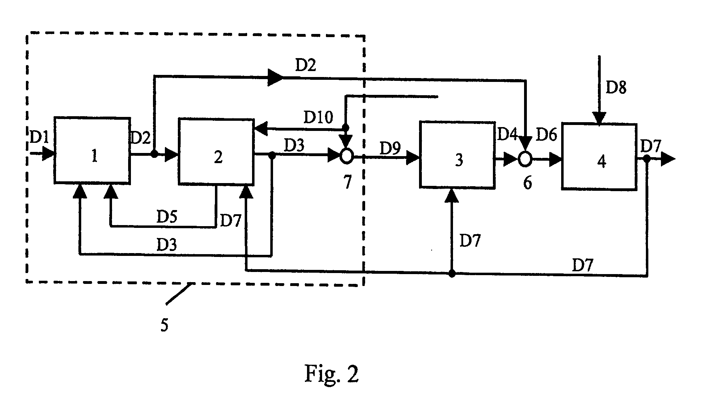

**Fig.** 2 zeigt die erfindungsgemäße Anordnung für den Fall, daß die Vorsteuerung 5 für einen Prozeß eingesetzt wird, der bereits über eine Regeleinrichtung 3 und über bekannte Sollwerte D10 verfügt. Dazu müssen dem Prozeßmodell 2 die bereits vorhandenen Sollwerte D10 zugeführt werden. Die Modellausgangsgrößen D3 werden dann an einer Additionsstelle 7 mit den bereits vorhandenen Sollwerten D10 korrigiert. Die daraus resultierenden Sollwerte D9 werden schließlich der Regeleinrichtung 3 zugeführt.

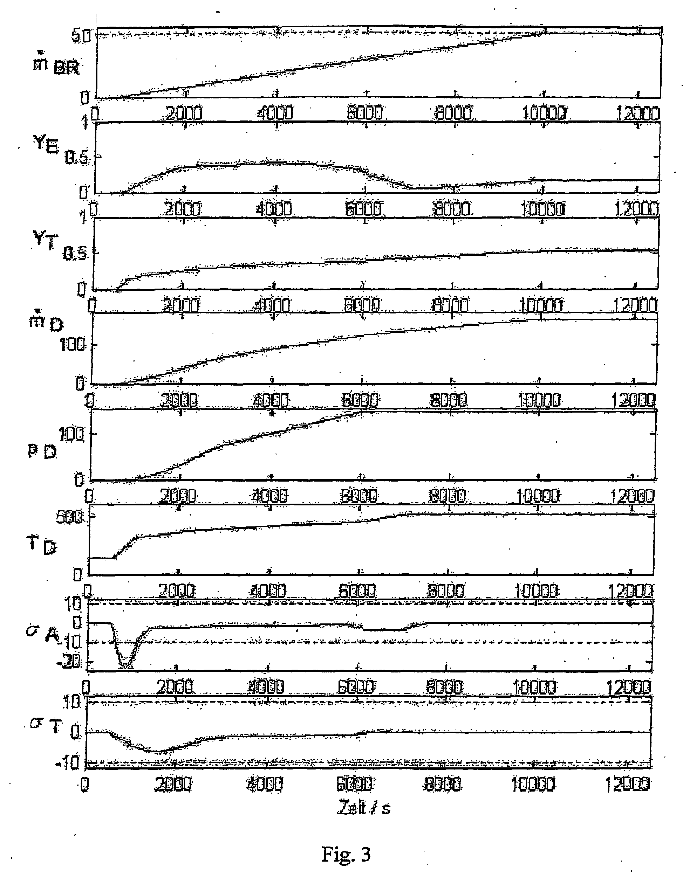

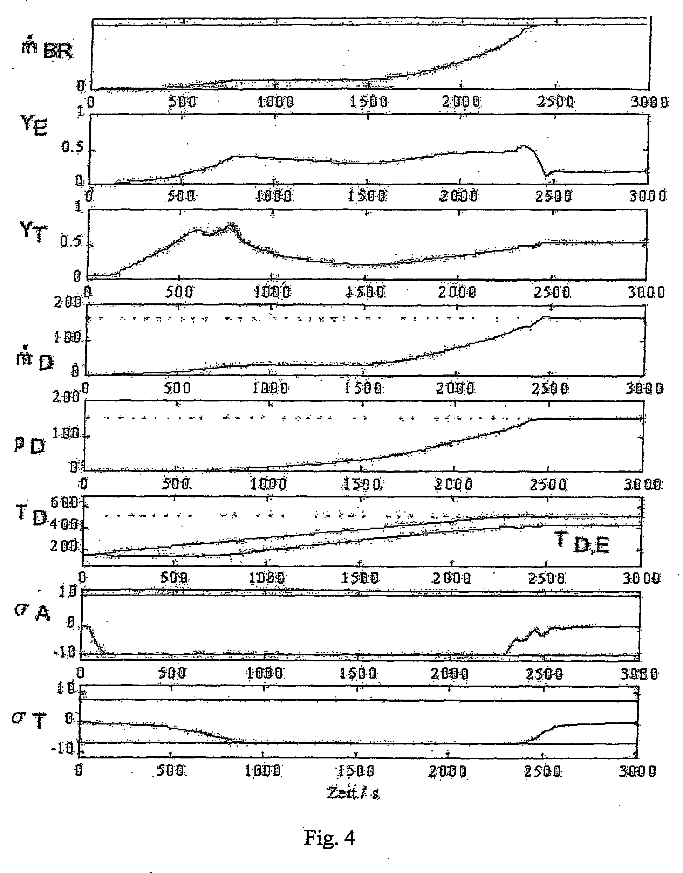

Legende zu den Darstellungen der Kurven in den **Fig.** 3 und **Fig.** 4:

$\dot{m}_{BR}$: Brennstoff- Massendurchfluß [kg/s],

$Y_E$: Stellung des Einspritzregelventils,

$Y_T$: Stellung der Turbinenumleitstation,

$\dot{m}_D$: Dampf- Massendurchfluß am Kesselaustritt [kg/s],

$p_D$: Dampfdruck am Kesselaustritt [bar],

$T_D$: Dampfeintrittstemperatur vor der letzten Überhitzung [˚C],

$\sigma_A$: Wärmespannung am Austrittsammler [N/mm$^2$],

$\sigma_T$: Wärmespannung an der Trommel [N/mm$^2$],

**Fig.** 3 verdeutlicht die Simulation einer typischen Anfahrt eines Dampferzeuger mit den Stellungen ($Y_E$, $Y_T$) des Einspritzregelventils und der Turbinenumleitstation. Die Brennstoffmenge ($\dot{m}_{BR}$) wird dabei innerhalb von 10 000s rampenförmig erhöht. Ziel ist die Steigerung des Dampfdruckes ($p_D$), der Dampftemperatur ($T_D$) und der Dampfmenge ($\dot{m}_D$) ausgehend von den stationären Werten $p_D \approx 0{,}1$ MPa, $T_D \approx 146$˚C und $\dot{m}_D \approx 0$ kg/s auf deren Zielendwerten von 15 MPa für $p_D$, 520˚C für $T_D$ und 163 kg/s für $\dot{m}_D$. Aufgetragen wurden u.a. zwei Verläufe für die Wärmespannungen ($\sigma_A$, $\sigma_T$) des Austrittssammlers. Die lange Anfahrzeit von 10 000s ergibt sich aus der Forderung, die Wärmespannungen in den zulässigen Grenzen zu halten.

**Fig.** 4 zeigt eine Simulation für eine optimierte Anfahrt eines Dampferzeugers unter Einhaltung vorgeschriebener Grenzen, die nach 2 500s beendet ist, d.h. sie erfolgt vier mal schneller als die in **Fig.** 3 dargestellte Anfahrt. Darüber hinaus ist der Brennstoffverbrauch, der als Fläche unterhalb der Kurve von $\dot{m}_{BR}$ bis zum Erreichen der stationären Werte nach 10 000s in **Fig.** 3 bzw. 2 500s in **Fig.** 4 dargestellt ist, bei der optimierten Anfahrt in **Fig.** 4 ca. drei mal kleiner als in **Fig.** 3. Im Unterschied zu **Fig.** 3 werden die Freibeträge für die Wärmespannungen ($\sigma_A$, $\sigma_T$) voll ausgeschöpft. Dabei wurden gemäß **Fig.** 1 die optimierten Sollstellungen für Brennstoff, Druck und Dampftemperatur sowie die Vorsteuerungen für das Einspritzregelventil und die Turbinenumleitstation für die Simulation aufgeschaltet. Bei der Bestimmung dieser optimierten Sollwertführungen wurde ein Gütefunktional (J) durch eine numerische Optimierung minimiert.

Beispielhaft werden nun das Gütefunktional und die Rand- und Nebenbedingungen genannt, die zu den optimalen Verläufen gemäß **Fig.** 4 geführt haben. Als Gütefunktional wurde folgendes Integral gewählt:

$$J = \int_{t_0}^{t_E} \left[ w_{p_D}, w_{T_D}, w_{\dot{m}_D} \right] \begin{bmatrix} \left[ p_D(t) - p_{D,SW} \right]^2 \\ \left[ T_D(t) - T_{D,SW} \right]^2 \\ \left[ \dot{m}_D(t) - \dot{m}_{D,SW} \right]^2 \end{bmatrix} dt$$

Dabei wurde als Optimierungsziel die Minimierung des Gütefunktionals J gewählt. Die Variablen des Gütefunktionals haben folgende Bedeutung:

$J$: Wert des Integrals über die gewichteten quadratischen Abweichungen,

$t_0$: Zeitpunkt Anfahrtbeginn,

$t_E$: Zeitpunkt Anfahrtende,

$w_{p_D}$: Gewichtungsfaktor für die quadratische Abweichung Dampfdruck,

$w_{T_D}$: Gewichtungsfaktor für die quadratische Abweichung Dampftemperatur,

$w_{\dot{m}_D}$ Gewichtungsfaktor für die quadratische Abweichung Dampfmenge,

$p_{D,SW}$: Ziel- Sollwert für den Dampfdruck,

$T_{D,SW}$ Ziel- Sollwert für die Dampftemperatur,

$\dot{m}_{D,SW}$: Ziel- Sollwert für die Dampfmenge,

unter Einhaltung folgender Rand- und Nebenbedingungen $0 \,[\text{kg/s}] \leq \dot{m}_{BR} \leq 50,4 \,[\text{kg/s}]$, $0 \,[\text{kg/s}^2] \leq \ddot{m}_{BR} \leq 0,0053 \,[\text{kg/s}^2]$ (monoton steigende Brennstoffmenge),

- $0,05 \leq Y_T \leq 1$ (Verstellbereich der Turbinenumleitung),

- $0 \leq Y_E \leq 1$ (Verstellbereich des Einspritzregelventils),

- $\max|\sigma_A| \leq 7 \,[\text{N/mm}^2]$ (maximaler Wert für die Wärmespannung am Austrittsammler),

- $\max|\sigma_T| \leq 10 \,[\text{N/mm}^2]$ (maximaler Wert für die Wärmespannung an der Trommel),

- $T_{D,E}(t) > T_{satt} = f(p_D)$ (die Dampfeintrittstemperatur vor der letzten Überhitzung $T_{D,E}(t)$ sollte höher als die Satt-dampftemperatur $T_{satt}$ sein, die eine Funktion des Dampfdruckes $p_D$ ist.

- $T_D(t) > T_{D,E}(t)$ (garantierte Überhitzung, d.h. die Austrittstemperatur der letzten Überhitzung ist höher als die Eintrittstemperatur)

Die Optimierungsvariablen sind die Brennstoffmenge $\dot{m}_{BR}$, die Stellung der Turbinenumleitstation $Y_T$ und die Stellung des Einspritzregelventils $Y_E$. Diese Größen entsprechen in der **Fig.** 1 den Stellgrößen D2. Die Prozeßmodell-größen $\dot{m}_D$, $T_D$, $T_{D,E}$ und $p_D$ in den **Fig.** 3 und 4, die den Modellausgangsgrößen D3 in der **Fig.** 1 entsprechen, werden durch Simulation, d.h. durch Aufschaltung der Stellgrößen D2 auf das Prozeßmodell ermittelt.

Bei praktischen Anwendungen kommen nicht nur Wärmespannungen, sondern auch Temperaturdifferenzen im dickwandigen Bauteil zum Einsatz. Diese Temperaturdifferenzen werden durch invasive Thermoelemente erfaßt. Das vorgestellte Verfahren ist dann genauso einsetzbar.

**Patentansprüche**

1. Steuer- und Regelverfahren zum An- oder Abfahren wenigstens einer verfahrenstechnischen Komponente eines technischen Prozesses (4), wobei

   a) mittels einer Regeleinrichtung (3) und einer vorgeschalteten modellgestützten Vorsteuerung (5) mindestens eine Stellgröße (D6) gebildet wird, die dem Prozeß (4) zugeführt wird,
   b) von einem Optimierer (1) der Vorsteuerung (5), dem wenigstens eine Führungsgröße (D1) für den realen Prozeß (4) zugeführt wird, wenigstens eine optimierte Modellstellgröße (D2) ausgegeben wird, die einem Prozeßmodell (2) der Vorsteuerung (5) als Eingangsgröße zugeführt wird, und außerdem zu mindestens einer Ausgangsgröße (D4) der Regeleinrichtung (3) zur Bildung der Stellgröße (D6) addiert wird,
   c) mindestens eine Modellausgangsgröße (D3) des Prozeßmodells (2) der Regeleinrichtung (3) als Sollwert zugeführt wird und außerdem - neben inneren, insbesondere im realen Prozeß nicht meßbaren Größen (D5) - zum Optimierer (1) rückgeführt wird,
   d) die Modellausgangsgröße (D3) mittels des Prozeßmodells (2) gebildet wird, wobei das Prozeßmodell (2) dem realen Prozeß (4) nachgeführt wird, und
   e) das Führungsverhalten der die Vorsteuerung (5), die Regeleinrichtung (3) und den realen Prozeß (4) aufweisenden Einrichtung bei Änderung der Führungsgrößen (D1) vom Störgrößenverhalten des realen Prozesses (4) bei Einwirkungen der Störgrößen (D8) entkoppelt wird.

2. Verfahren nach Anspruch 1, wobei die Ermittlung des Modells des betrachteten Prozesses im Optimierer durch Formulierung eines Gütefunktionals durch mathematisch- physikalische Methoden erfolgt, und das Gütefunktional mit Hilfe eines geeigneten Optimierungsverfahrens maximiert bzw. minimiert wird.

3. Verfahren nach einem der vorherigen Ansprüche, **dadurch gekennzeichnet, daß** die Kombination einer rigorosen dynamischen Modellbildung mit einer durchgeführten Optimierung unter Berücksichtigung von Rand- und Nebenbedingungen, insbesondere verfahrenstechnisch- physikalischen Begrenzungen, auf den realen Prozeß angewendet wird.

4. Verfahren nach einem der vorherigen Ansprüche, **dadurch gekennzeichnet, daß** zur Nachbildung des Prozeßmodells (2) mindestens eine messbare Ausgangsgröße (D7) des realen Prozesses (4) verwendet wird.

5. Verfahren nach einem der vorherigen Ansprüche, **dadurch gekennzeichnet, daß** im Fall bereits in Betrieb befindlicher Anlagen das Prozeßmodell (2) vollständig oder teilweise aus Messungen identifiziert wird, oder durch solche Messungen überprüft wird.

6. Verfahren nach einem der vorherigen Ansprüche, **dadurch gekennzeichnet, daß** für den Fall, daß die verfahrenstechnische Komponente ein Dampferzeuger mit Wassereinspritzung ist, die Einspritzung schon vor Beendigung der Anfahrt erfolgt, um ein kostenoptimales Anfahren unter Einhaltung vorhandener Begrenzungen zu ermöglichen.

7. Verfahren nach einem der vorherigen Ansprüche, **dadurch gekennzeichnet, daß** mittels der Vorsteuerung (5) korrigierend auf eine im Prozeß vorhandene Regeleinrichtung (3) eingewirkt wird.

8. Regeleinrichtung zum An- oder Abfahren wenigstens einer verfahrenstechnischen Komponente eines technischen Prozesses (4), wobei eine Vorsteuerung (5) vorhanden ist, die einen Optimierer (1) und ein Prozeßmodell (2) enthält, und deren optimierte Modellausgangsgröße (D3) einer realen Regelungseinrichtung (3) zugeführt wird, und eine Modellstellgröße (D2) aus dem Optimierer (1) am Ausgang der Regeleinrichtung (3) an einer Additionsstelle (6) dazuaddiert wird.

9. Regeleinrichtung nach Anspruch 8, wobei die Vorsteuerung (5) für einen Prozeß eingesetzt ist, der bereits über eine Regeleinrichtung (3) und über bekannte Sollwerte (D10) verfügt und dem Prozeßmodell (2) bereits vorhandenen Sollwerte (D10) zugeführt werden, die Modellausgangsgrößen (D3) an einer weiteren Additionsstelle (7) mit den bereits vorhandenen Sollwerten (D10) korrigiert werden und die daraus resultierenden Sollwerte (D9) der Regeleinrichtung (3) zugeführt werden.

**Claims**

1. Open-loop and closed-loop control method for starting up and shutting down at least one process component of a technical process (4), in which

   a) at least one manipulated variable (D6) which is fed to the process (4) is formed by means of a controlling device (3) and an upstream model-assisted pilot control (5),
   b) an optimizer (1) of the pilot control (5), to which at least one command variable (D1) for the real process (4) is fed, outputs at least one optimized model manipulated variable (D2) that is fed to a process model (2) of the pilot control (5) as input variable, and is, moreover, added to at least one output variable (D4) of the controlling device (3) in order to form the manipulated variable (D6),
   c) at least one model output variable (D3) of the process model (2) is fed to the controlling device (3) as setpoint and, moreover, fed back to the optimizer (1) - alongside internal variables (D5), in particular ones that cannot be measured in the real process -,
   d) the model output variable (D3) is formed by means of the process model (2), the process model (2) tracking the real process (4) and
   e) in the event of a change in the command variables (D1) the control response of the device having the pilot control (5), the controlling device (3) and the real process (4) is decoupled from the interference response of the real process (4) in the case of effects due to interference (D8).

2. Method according to Claim 1, in which the model of the process considered is determined in the optimizer by formulating a quality functional using mathematical and physical methods, and the quality functional is maximized or minimized with the aid of a suitable optimization method.

3. Method according to one of the preceding claims, **characterized in that** the combination of a rigorous dynamic modelling with an accomplished optimization is applied to the real process, taking account of boundary and secondary conditions, in particular physical constraints of process engineering.

4. Method as claimed in one of the preceding claims, **characterized in that** at least one measurable output variable (D7) of the real process (4) is used for simulating the process model (2).

5. Method according to one of the preceding claims, **characterized in that** in the case of systems already in operation the process model (2) is identified completely or partially from measurements, or checked by means of such measurements.

6. Method according to one of the preceding claims, **characterized in that** in the case when the process component is a steam generator with water injection, the injection is already performed before completion of start-up, to permit a start-up at optimum cost while observing existing constraints.

7. Method according to one of the preceding claims, **characterized in that** the pilot control (5) is used to exert a corrective influence on a controlling device (3) present in the process.

8. Controlling device for starting up or shutting down at least one process component of a technical process (4), in which there is present a pilot control (5) which includes an optimizer (1) and a process model (2), and whose optimized model output variable (D3) is fed to a real controlling device (3), and a model manipulated variable (D2) from the optimizer (1) is added thereto at the output of the controlling device (3) at an addition point (6).

9. Controlling device according to Claim 8, in which the pilot control (5) is used for a process which already has a controlling device (3) and known setpoints (D10), and the process model (2) is already fed existing setpoints (D10), the model output variables (D3) being corrected at a further addition point (7) with the aid of the already existing setpoints (D10), and the setpoints (D9) resulting therefrom are fed to the controlling device (3).

**Revendications**

1. Procédé de commande et de régulation pour démarrer et arrêter au moins un composant de traitement d'un processus technique (4), selon lequel

a) on établit, au moyen d'un dispositif de régulation (3) et d'une commande pilote (5) fondée sur un modèle, placée en amont, au moins une grandeur réglante (D6) qui est transmise au processus (4),

b) un optimiseur (1) de la commande pilote (5), qui reçoit au moins une grandeur de référence (D1) pour le processus réel (4), délivre au moins une grandeur réglante de modèle (D2) optimisée qui est transmise en tant que grandeur d'entrée à un modèle de processus (2) de la commande pilote (5) et est en outre ajoutée à au moins une grandeur de sortie (D4) du dispositif de régulation (3) pour établir la grandeur réglante (D6),

c) au moins une grandeur de sortie de modèle (D3) du modèle de processus (2) est transmise en tant que valeur de consigne au dispositif de régulation (3) et est retournée en outre à l'optimiseur (1), en plus de grandeurs internes (D5) ne pouvant notamment pas être mesurées lors du processus réel,

d) la grandeur de sortie de modèle (D3) est établie au moyen du modèle de processus (2), ledit modèle de processus (2) étant ajusté avec précision sur le processus réel (4), et

e) en cas de variation des grandeurs de référence (D1), le comportement de pilotage du système, comprenant la commande pilote (5), le dispositif de régulation (3) et le processus réel (4), est découplé du comportement de grandeurs perturbatrices du processus réel (4) en cas d'action des grandeurs perturbantes (D8).

2. Procédé selon la revendication 1, selon lequel la détermination du modèle du processus étudié a lieu dans l'optimiseur, par formulation d'une fonction de qualité par des méthodes mathématiques et physiques, et la fonction de qualité est maximisée ou minimisée à l'aide d'un procédé d'optimisation adapté.

3. Procédé selon une des revendications précédentes, **caractérisé par le fait que** la combinaison d'une modélisation dynamique rigoureuse avec l'exécution d'une optimisation tenant compte de conditions marginales et secondaires, notamment de restrictions physiques du procédé industriel, est appliquée au processus réel.

4. Procédé selon une des revendications précédentes, **caractérisé par le fait que**, pour reproduire le modèle de processus (2), on utilise au moins une grandeur de sortie (D7) mesurable du processus réel (4).

5. Procédé selon une des revendications précédentes, **caractérisé par le fait que** dans le cas d'installations qui sont déjà en service, le modèle de processus (2) est identifié complètement ou en partie à partir de mesures ou est vérifié par de telles mesures.

6. Procédé selon une des revendications précédentes, **caractérisé par le fait que** dans le cas où le composant de processus technique est un générateur de vapeur avec injection d'eau, l'injection a lieu déjà avant la fin du démarrage pour permettre un démarrage optimal en termes de coût, tout en respectant les restrictions existantes.

7. Procédé selon une des revendications précédentes, **caractérisé par le fait que** la commande pilote (5) permet d'avoir une action correctrice sur un dispositif de régulation (3) prévu dans le processus.

8. Dispositif de régulation pour démarrer ou arrêter au moins un composant de traitement d'un processus technique (4), dans lequel il est prévu une commande pilote (5) qui comprend un optimiseur (1) et un modèle de processus (2) et dont la grandeur de sortie de modèle (D3) optimisée est transmise à un dispositif de régulation (3) réel, et une grandeur réglante de modèle (D2) provenant de l'optimiseur (1) est ajoutée à la sortie du dispositif de régulation (3), en un point d'addition (6).

9. Dispositif de régulation selon la revendication 8, dans lequel la commande pilote (5) est utilisée pour un processus qui dispose déjà d'un dispositif de régulation (3) et de valeurs de consigne (D10) connues, et des valeurs de consigne (D10) déjà existantes sont transmises au modèle de processus (2), les grandeurs de sortie de modèle (D3) sont corrigées avec les valeurs de consigne (D10) déjà existantes, en un point d'addition (7) supplémentaire, et les valeurs de consigne (D9) qui en résultent sont transmises au dispositif de régulation (3).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3133222